# EUROPEAN PATENT APPLICATION

(11) **EP 2 887 300 A1**
(43) Date of publication of application: **24.06.2015**
(21) Application number: 14275263.3
(22) Date of filing: 19.12.2014
(51) Int. Cl.: G06Q 30/06

(54) **Electronic shelf label having multiple display areas, electronic shelf label system, and operating method thereof**

(30) Priority: 20.12.2013 KR 20130160636; 19.09.2014 KR 20140125191; 12.12.2014 KR 20140179790
(71) Applicant: Samsung Electro-Mechanics Co., Ltd., Gyeonggi-do (KR)
(72) Inventor: Byun,, Gi Young, Gyeonggi-Do (KR)
(74) Representative: Potter Clarkson LLP

(57) **Abstract**

An electronic shelf label wirelessly receiving a data packet including an identification through a gateway from an electronic shelf label server and requesting that the gateway transmit display information when the identification included in the data packet coincides with an identification of the electronic shelf label may include: a wireless communications unit receiving the data packet including at least one of the identification ID, the display information, and a display identification flag; a control unit controlling a screen display of the display information based on the display identification flag; and a single display panel including a driving unit having first to N-th drivers (N indicates a natural number of two or above) individually controlled by the control unit and a display unit having first to N-th display areas independently driven by each of the first to N-th drivers to display the display information.

## Description

### CROSS-REFERENCE TO RELATED APPLICATIONS

This application claims the priorities and benefits of Korean Patent Application Nos. 10-2013-0160636 filed on December 20, 2013, 10-2014-0125191 filed on September 19, 2014, and 10-2014-0179790 filed on December 12, 2014, with the Korean Intellectual Property Office, the disclosures of which are incorporated herein by reference.

### BACKGROUND

The present disclosure relates to an electronic shelf label having multiple display areas, an electronic shelf label system, and an operating method thereof.

Traditionally, a paper tag on which price information is directly written thereon manually or printed thereon by a printer has been used as a scheme of displaying product information for customers on product display stands. However, such a paper tag price display scheme has a disadvantage in that paper tags need to be replaced whenever product price information is changed or products are changed.

Research into and development of an electronic tag, hereinafter referred to as an electronic shelf label (ESL), have been conducted that is capable of overcoming the disadvantages of paper tags as described above. Recently, such an electronic shelf label has been applied to some product display stands. Here, an electronic shelf label system including a plurality of electronic shelf labels may be installed in a store.

Such an electronic shelf label system may automatically update product information displayed thereon and may rapidly change product information displayed thereon, by using a wireless communications scheme.

However, in an existing electronic shelf label system, one electronic shelf label may output information for a single product, and thus, there is a limitation in efficiently displaying information for a plurality of products. For example, two items of information, for example, product information, and promotion information, may not be independently displayed using a single electronic shelf label.

Therefore, in a system using a single display panel, as in the case of the electronic shelf label of the electronic shelf label system, research into and development of a technology for efficiently outputting and updating a large amount of information using a single display panel has been demanded.

The following Related Art Document (Patent Document 1) relates to a display driving circuit, but does not disclose a solution for the above-mentioned problem.

### [Related Art Document]

Korean Patent Laid-Open Publication No. 10-2007-0028839

### SUMMARY

An exemplary embodiment in the present disclosure may provide an electronic shelf label having multiple display areas, an electronic shelf label system, and an operating method thereof capable of efficiently displaying display information including at least one of a plurality of items of product information and a plurality of items of promotion information on a single display panel by dividing a display area of the single display panel into a plurality of display areas, independently driving the plurality of display areas, and allowing the display information to be displayed in a single display mode or a divided display mode.

According to an exemplary embodiment in the present disclosure, an electronic shelf label wirelessly receiving a data packet including an identification (ID)through a gateway connected to an electronic shelf label server and requesting that the gateway transmit display information when the identification included in the data packet coincides with an identification of the electronic shelf label may include: a wireless communications unit receiving the data packet including at least one of an identification , display information, and a display identification flag; a control unit controlling a screen display of the display information; and a single display panel including a driving unit having first to N-th drivers (N indicates a natural number of two or above) individually controlled by the control unit and a display unit having first to N-th display areas independently driven by each of the first to N-th drivers to display the display information.

According to another exemplary embodiment in the present disclosure, an operating method of an electronic shelf label wirelessly receiving a data packet including an identification through a gateway connected to an electronic shelf label server, displaying display information included in the data packet that is requested of and received from the gateway on a screen when the identification included in the data packet coincides with an identification of the electronic shelf label, and including a single display panel including a driving unit having at least first and second drivers that are individually driven and a display unit having at least first and second display areas may include: wirelessly receiving the data packet including at least one of the identification, the display information, and a display identification flag; determining whether a display mode is a single display mode or a divided display mode based on the display identification flag; determining the number of products in connection with whether the product information is product information for two different products or product information for a single product based on the display identification flag in the case in which it is determined that the display mode is the divided display mode; determining whether a display area is the first display area or the second display area based on the display identification flag; and displaying the display information in the at least first and second display areas of the single display panel depending on determination results of the display mode, the number of products, and the display area.

### BRIEF DESCRIPTION OF DRAWINGS

The above and other exemplary embodiments, features and other advantages in the present disclosure will be more clearly understood from the following detailed description taken in conjunction with the accompanying drawings, in which:
FIG. 1 is a view illustrating a configuration of an electronic shelf label (ESL) system according to an exemplary embodiment in the present disclosure;
FIG. 2 is a block diagram of an electronic shelf label according to an exemplary embodiment in the present disclosure;
FIG. 3 is a view illustrating a first example of a display identification flag of a data packet (DATA-PKT) according to an exemplary embodiment in the present disclosure;
FIG. 4 is a view illustrating an example of display information according to an exemplary embodiment in the present disclosure;
FIG. 5 is a view illustrating an example of display information according to an exemplary embodiment in the present disclosure;
FIG. 6 is a view illustrating a display area of a single display panel of the electronic shelf label according to an exemplary embodiment in the present disclosure;
FIG. 7 is a flow chart illustrating an operating method of an electronic shelf label according to an exemplary embodiment in the present disclosure;
FIG. 8 is a flow chart illustrating an operating method of an electronic shelf label according to an exemplary embodiment in the present disclosure;
FIGS. 9A through 9C are views illustrating display examples of a single display panel according to exemplary embodiments in the present disclosure;
FIGS. 10A and 10B are views illustrating a portrait mode or a landscape mode according to exemplary embodiments in the present disclosure;
FIG. 11 is a view illustrating a second example of a display identification flag of a data packet according to an exemplary embodiment in the present disclosure;
FIG. 12 is a flow chart illustrating an operating method of an electronic shelf label according to an exemplary embodiment in the present disclosure;
FIG. 13 is a view illustrating a third example of a display identification flag of a data packet according to an exemplary embodiment in the present disclosure;
FIG. 14 is a flow chart illustrating an operating method of an electronic shelf label according to an exemplary embodiment in the present disclosure; and
FIG. 15 is view illustrating an operating sequence of an electronic shelf label system according to an exemplary embodiment in the present disclosure.

### DETAILED DESCRIPTION

Exemplary embodiments in the present disclosure will now be described in detail with reference to the accompanying drawings.

The disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

In the drawings, the shapes and dimensions of elements may be exaggerated for clarity, and the same reference numerals will be used throughout to designate the same or like elements.

First, an electronic shelf label, an electronic shelf label system, and an operating method thereof according to an exemplary embodiment in the present disclosure will be described.

Each of a plurality of electronic shelf labels may include a single display panel of which a display area is divided into a plurality of display areas that are independently driven by corresponding drivers, and control units of the plurality of electronic shelf labels may control corresponding drivers to display display information included in a data packet in the plurality of display areas of the single display panel.

Through the above-mentioned operation, the display information may be individually displayed in the plurality of display areas of the single display panel. This will be described in detail below.

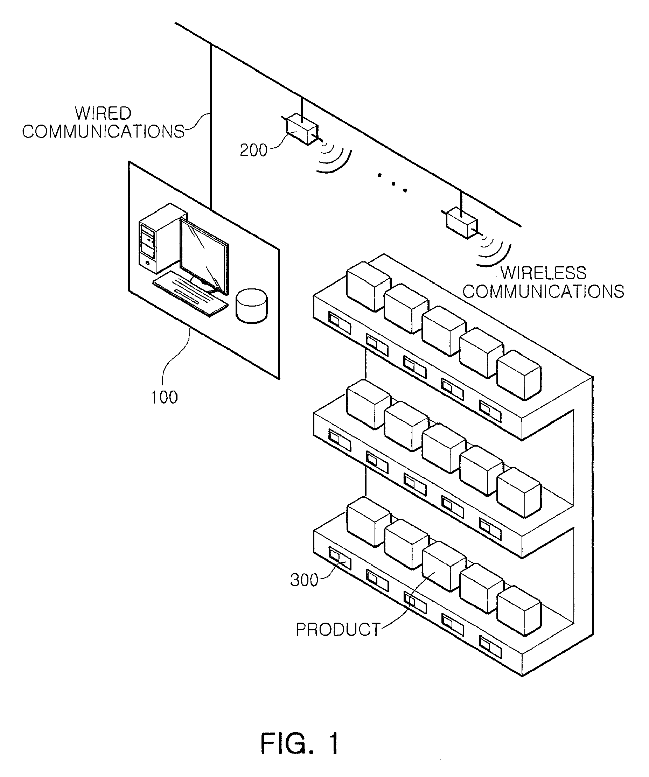

FIG. 1 is a view illustrating a configuration of an electronic shelf label (ESL) system according to an exemplary embodiment in the present disclosure. Referring to FIG. 1, the electronic shelf label system according to an exemplary embodiment in the present disclosure may include an electronic shelf label server 100, a plurality of gateways 200, and a plurality of electronic shelf labels 300.

The electronic shelf label server 100 may create a data packet (DATA-PKT) including at least one of an identification (ID) and display information and transmit the data packet to a plurality of gateways 200 in a wired or wireless scheme. Alternatively, the electronic shelf label server 100 may create a data packet (DATA-PKT) including at least one of an identification, a display identification flag (DIF), and display information and transmit the data packet to the plurality of gateways 200 in a wired or wireless scheme. In this case, each of the plurality of gateways 200 may be connected to a plurality of electronic shelf label groups in a wireless scheme through a communications network, and each group of the plurality of electronic shelf labels may include a plurality of electronic shelf labels.

Each of the gateways 200 may wirelessly transmit the data packet (DATA-PKT) transmitted from the electronic shelf label server 100 to the plurality of electronic shelf labels 300.

Meanwhile, each of the gateways may form a personal area network (PAN) communications network in order to perform wireless communications with each of the plurality of electronic shelf label groups including the plurality of electronic shelf labels. Here, the plurality of electronic shelf label groups may be identified through an identification, for example, a Group ID, and the plurality of electronic shelf labels may be identified through an identification, for example, a media access control (MAC) address.

For example, in each exemplary embodiment, the identification (ID) may be one of the Group ID and the MAC address.

Each of the plurality of electronic shelf labels 300 may receive the data packet (DATA-PKT) from the gateways 200 and display the display information included in the data packet (DATA-PKT).

Alternatively, each of the plurality of electronic shelf labels 300 may display the display information depending on the display identification flag (DIF) included in the data packet (DATA-PKT) when the identification included in the data packet coincides with an identification of the electronic shelf label 300. Conversely, when the identification included in the data packet does not coincide with the identification of the electronic shelf label, the corresponding electronic shelf label may determine that a display information update therefor is not present.

Here, the display information may include information including at least one of product information and promotion information. For example, the display information may include product information for two products, such as product information for product A and product information for product B, an item of product information and an item of promotion information, and two items of different promotion information. The product information may be information associated with a name, a price, an expiration date, a place of origin, a product number, manufacturing company information, and the like, of a product, and the promotion information may be promotion information related to a product or promotion information unrelated to a product. For example, the promotion information may be discount sale information, product advertisement information, recipes information, a caution, or event information such as limited sale information, and is not particularly limited as long as it is information distinguished from general product information.

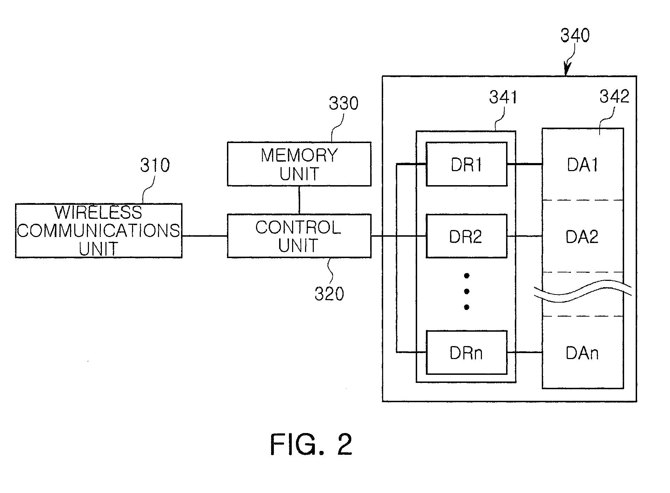

FIG. 2 is a block diagram of an electronic shelf label according to an exemplary embodiment in the present disclosure.

Referring to FIG. 2, each of the plurality of electronic shelf labels 300 may include a wireless communications unit 310, a control unit 320, and a single display panel 340.

In addition, the electronic shelf label 300 may further include a memory unit 330 for storing required information therein during an operation.

The wireless communications unit 310 may receive the data packet (DATA-PKT) including at least one of the identification ID, the display identification flag (DIF), and the display information.

The control unit 320 may control a screen display of the display information when the identification included in the data packet coincides with the identification of the electronic shelf label, for example.

Alternatively, the control unit 320 may control a screen display of the display information based on the display identification flag (DIF) when the identification included in the data packet coincides with the identification of the electronic shelf label, as another example.

The memory unit 330 may store the data packet (DATA-PKT) therein in order to update the display information, by way of example.

In addition, the single display panel 340 may include a driving unit 341 and a display unit 342. The driving unit 341 may include first to N-th drivers DR1 to DRn individually controlled by the control unit 320.

The display unit 342 may include first to N-th display areas DA1 to DAn independently driven by each of the first to N-th drivers DR1 to DRn (N indicates a natural number of two or above) to display the display information.

Meanwhile, the data packet according to an exemplary embodiment in the present disclosure may or may not include the display identification flag.

For example, in a case in which the data packet does not include the display identification flag, the control unit 320 may control the information included in the data packet to be displayed in each of the first to N-th display areas DA1 to DAn.

In such a case in which the display identification flag is not used, the electronic shelf label may display display information in a preset display manner. For example, in a case in which N items of information are included in the display information, the N items of information may be sequentially displayed in the first to N-th display areas DA1 to DAn.

Alternatively, in a case in which the display information includes a single item of information, the single item of information may be displayed in a predetermined area from among the first to N-th display areas DA1 to DAn. Accordingly, the display manner in the case of not using the display identification flag is not limited thereto in a case of predetermining the display manner.

For another example, in a case in which the data packet includes the display identification flag, the control unit 320 may select drivers to display the display information among the first to N-th drivers DR1 to DRn based on the display identification flag.

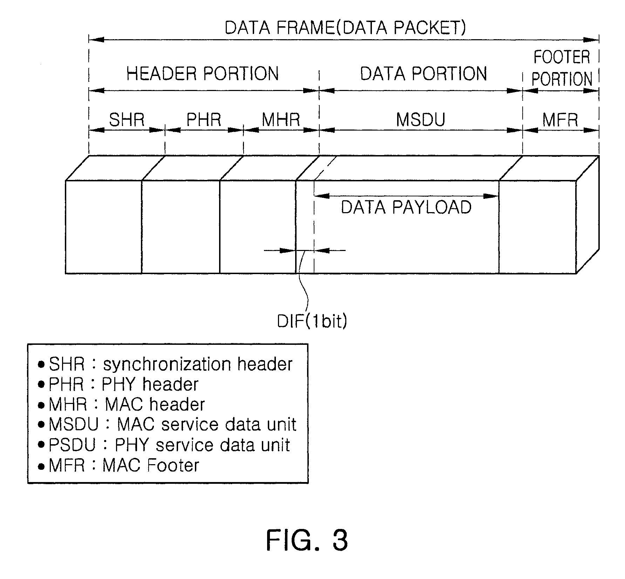

For example, the display identification flag (DIF) may include one bit, two bits, or at least three bits so as to identify a display area of the display information. This will be described with reference to FIGS. 3, 11, and 13.

FIG. 3 is a view illustrating a first example of a display identification flag of a data packet (DATA-PKT) according to an exemplary embodiment in the present disclosure. Referring to FIG. 3, the data packet (DATA-PKT) may include a header portion, a data portion, and a footer portion such as a media access control (MAC) footer.

The header portion may include a synchronization header (SHR), a physical layer (PHY) header (PHR), and an MAC header.

The data portion may be called an MAC service data unit, and may include a display identification flag (DIF) and a data payload.

Here, although an example in which the display identification flag (DIF) is included in the MAC service data unit has been shown in an exemplary embodiment in the present disclosure, the present disclosure is not limited thereto. That is, the display identification flag (DIF) may be included in the header portion or the footer portion.

Therefore, the display identification flag (DIF) is not limited to being positioned in a specific part or a specific position as long as it is included in the data packet (DATA-PKT) . Hereinafter, for convenience of explanation, the case in which the display identification flag (DIF) is included in the MAC service data unit will be described by way of example.

For example, in the case in which the display identification flag (DIF) of the data packet (DATA-PKT) is configured of one bit, the display identification flag (DIF) of one bit may be represented by "0" or "1", which are different information.

For example, the display identification flag (DIF) of one bit may represent whether a product is product A or product B. As another example, the display identification flag (DIF) of one bit may represent whether information is product information or promotion information.

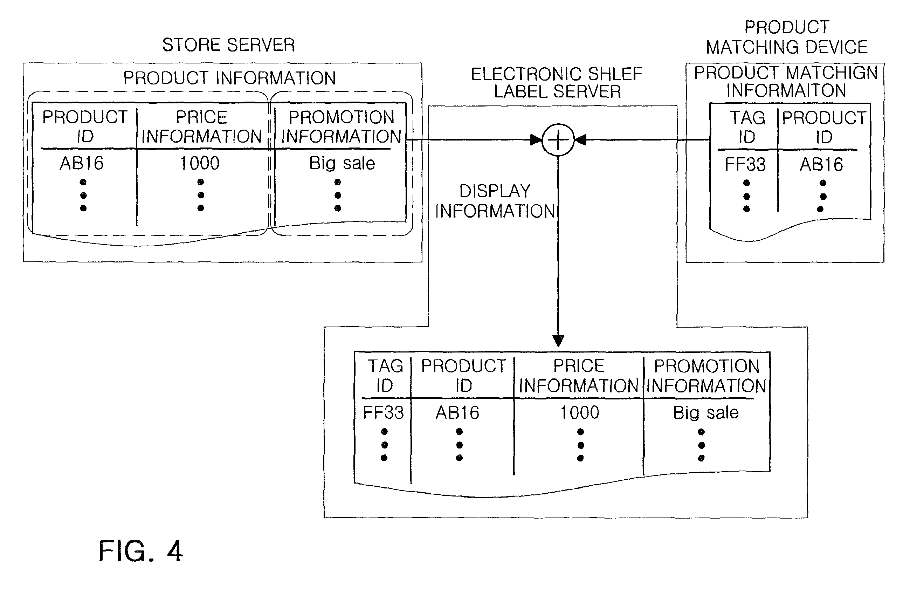

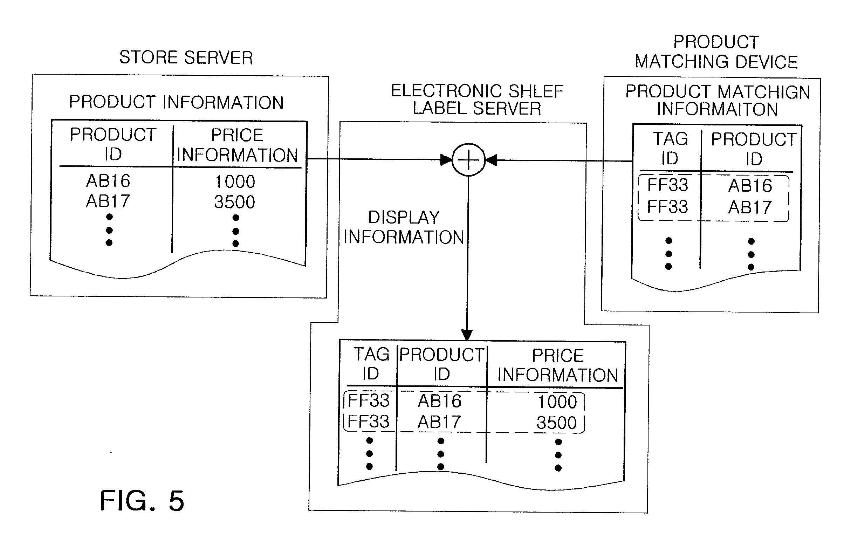

FIG. 4 is a view illustrating an example of product information according to an exemplary embodiment in the present disclosure, and FIG. 5 is a view illustrating an example of product information according to an exemplary embodiment in the present disclosure. Referring to FIG. 4, a store server may provide product information, such as product ID and price information, and promotion information to an electronic shelf label server. A product matching device may use a personal digital assistant (PDA), or the like, and may match the product ID and an electronic shelf label ID, that is a tag ID, to transfer the product ID and the electronic shelf label ID to the electronic shelf label server.

Here, the electronic shelf label server 100 may combine product matching information from the product matching device, and the product information and the promotion information from the store server, and thereby generate display information to be included in the data packet (DATA-PKT).

For example, the display information may include product information for a single product, such as a tag ID (an ESL ID) FF33, a product ID AB16, or price information 1000, and promotion information (Big sale). In this case, all information included in the display information may not be displayed in an electronic shelf label, and only necessary information may be displayed.

As described above, the display information of the data packet may mainly include the product information and the promotion information, and the electronic shelf label may display the promotion information separately from the product information when it uses this data packet.

Referring to FIG. 5, display information (ESL information) of the data packet (DATA-PKT) may include one tag ID FF33, two product IDs AB16 and AB17, and product information including price information 1000 and 3500 of each product. Through the use of such a data packet, product information for two products may be displayed on a single electronic shelf label.

Meanwhile, referring to FIGS. 1 through 5, in the display information as described above, price information on each of product IDs for products sold in a store may be transmitted from a store server to the electronic shelf label server 100 of the electronic shelf label system. The electronic shelf labels 300 may be installed in the store for each product, and management data including the display information of the electronic shelf label may be stored in and managed by the electronic shelf label server 100.

The electronic shelf label server 100 may combine the product information and the price information received from the store server with the product information for the electronic shelf label transferred from a product matching device to create display information.

The display information created as described above may be transmitted from the electronic shelf label server 100 to the electronic shelf label 300 through the gateway 200 and be displayed through the single display panel of the corresponding electronic shelf label.

As described above, the existing electronic shelf label may display display information for a single product through the single display panel. On the other hand, the single display panel according to an exemplary embodiment in the present disclosure may display product information for two products or product information and promotion information for a single product.

To this end, when a process of matching information for two products to one electronic shelf label and then transmitting the information to the electronic shelf label server 100 is performed as illustrated in FIG. 5 in a process of matching an ID of the electronic shelf label and an ID of the product to each other and then transmitting the IDs to the electronic shelf label server 100 using the product matching device, at the time of installing the electronic shelf label in advance, the electronic shelf label server 100 may match a single product to one electronic shelf label or match two products to one electronic shelf label and manage and control the product information depending on the above-mentioned matching.

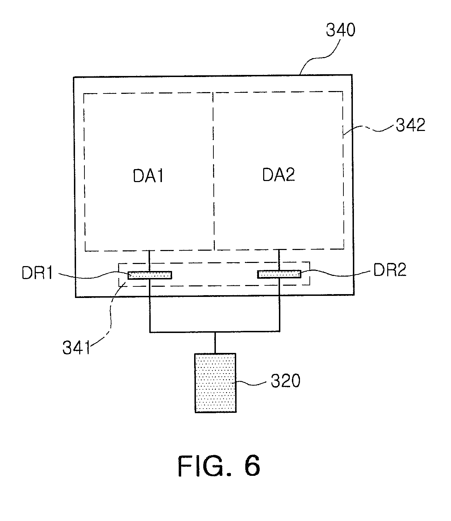

FIG. 6 is a view illustrating a display area of a single display panel of the electronic shelf label according to an exemplary embodiment in the present disclosure.

Referring to FIG. 6, the single display panel 340 may include a driving unit 341 and a display unit 342.

The driving unit 341 may include first and second drivers DR1 and DR2 individually controlled by the control unit 320. Here, each of the first and second drivers DR1 and DR2 may be formed of a driver integrated circuit (IC).

The display unit 342 may include first and second display areas DA1 and DA2 that may be independently driven by the first and second drivers DR1 and DR2 to independently display the display information.

Here, the single display panel 340 shown as the first and second display areas DA1 and DA2 is only an example for convenience of explanation, and the present disclosure is not limited thereto.

Here, the control unit 320 may transfer control signals and driving data to the first and second drivers DR1 and DR2 through interface communications with each of the first and second drivers DR1 and DR2. For example, in the case in which serial to peripheral interface (SPI) communications are applied, the control unit 320 may become a master, and the first and second drivers DR1 and DR2 may become first and second slaves, respectively.

In this case, the control unit 320 may select a corresponding slave depending on a state of the display identification flag (DIF) included in the data packet using a chip selection signal. For example, the control unit 320 may provide a "low signal" as the chip selection signal to select the driver, a corresponding slave.

As such, the control unit 320 may transfer display data to the driver, the selected slave, to control corresponding information to be displayed in a specific display area.

As described above, the control unit 320 may select a driver to display corresponding display information from among at least one of the first and second drivers based on the display identification flag.

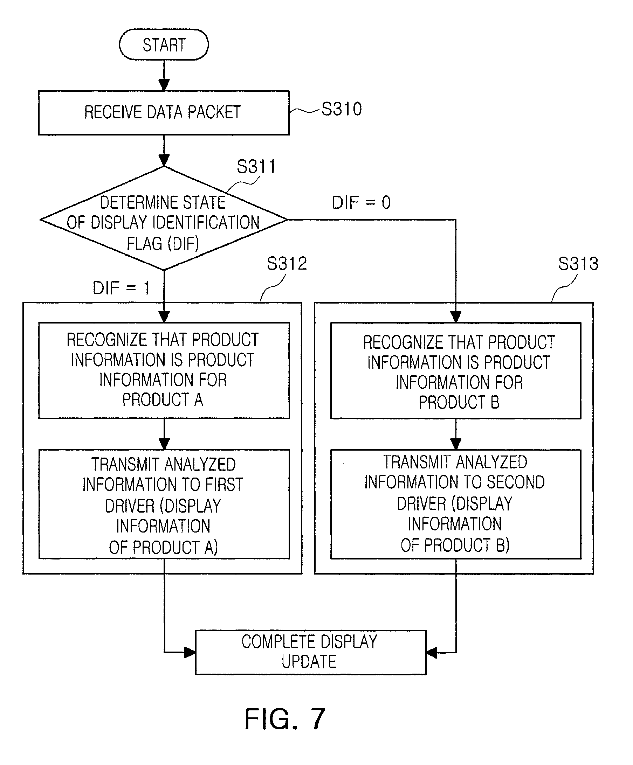

FIG. 7 is a flow chart illustrating an operating method of an electronic shelf label according to an exemplary embodiment in the present disclosure.

With regard to descriptions pertaining to an operating method of an electronic shelf label according to an exemplary embodiment in the present disclosure, the operations previously described with reference to FIGS. 1 through 6 can be applied thereto. Thus, repeated descriptions will be omitted in describing the aforementioned operating method, hereinafter.

Referring to FIGS. 1 through 7, for example, the wireless communications unit 310 of the corresponding electronic shelf label 300 may receive the data packet (DATA-PKT) (S310), and the control unit 320 of the electronic shelf label 300 may determine a state of the display identification flag (DIF) included in the data packet (DATA-PKT) (S311). Here, the control unit 320 may determine whether the identification included in the data packet coincides with the identification of the electronic shelf label, prior to determining the state of the display identification flag (DIF), and in a case of coincidence therebetween, may determine the state of the display identification flag (DIF).

In this case, the control unit 320 of the electronic shelf label 300 may determine that product information is product information related to product A when one bit of the display identification flag (DIF) is "1", thereby controlling the product information to be displayed in the first display area DA1 through the first driver DR1 of the single display panel 340 (S312).

Conversely, the control unit 320 of the electronic shelf label 300 may determine that the product information is product information related to product B when one bit of the display identification flag (DIF) is "0", thereby controlling the product information to be displayed in the second display area DA2 through the second driver DR2 of the single display panel 340 (S313).

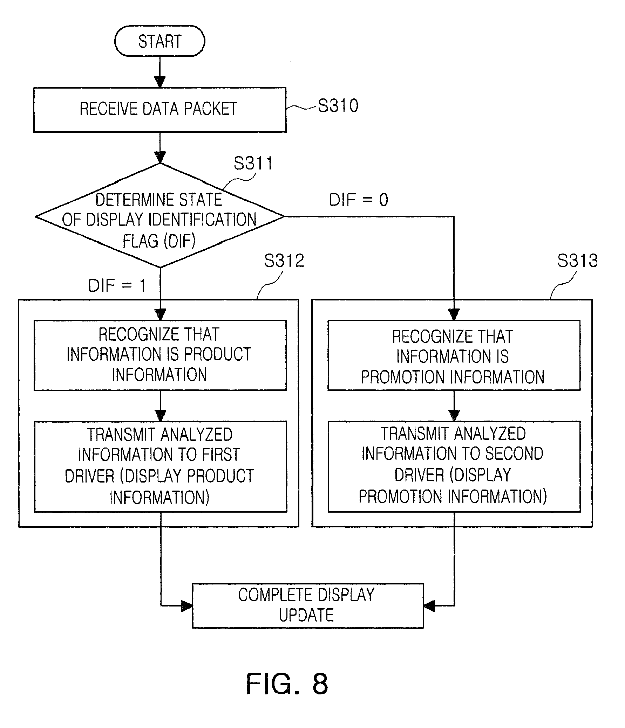

FIG. 8 is a flow chart illustrating an operating method of an electronic shelf label according to an exemplary embodiment in the present disclosure.

Referring to FIG. 8, for example, the wireless communications unit 310 of the corresponding electronic shelf label 300 may receive the data packet (DATA-PKT) (S310), and the control unit 320 of the electronic shelf label 300 may determine a state of the display identification flag (DIF) included in the data packet (DATA-PKT) (S311) when the identification included in the data packet coincides with the identification of the electronic shelf label.

Here, the control unit 320 of the electronic shelf label 300 may determine that information is product information when one bit of the display identification flag (DIF) is "1", thereby controlling the product information to be displayed in the first display area DA1 through the first driver DR1 of the single display panel 340 (S312).

Conversely, the control unit 320 of the electronic shelf label 300 may determine that the information is promotion information when one bit of the display identification flag (DIF) is "0", thereby controlling the promotion information to be displayed in the second display area DA2 through the second driver DR2 of the single display panel 340 (S313).

Accordingly, in the process in which the control unit 320 determines the display area of the single display panel 340 (S311), the control unit 320 may select a driver to display corresponding display information from among at least one of the first and second drivers based on the based on the display identification flag.

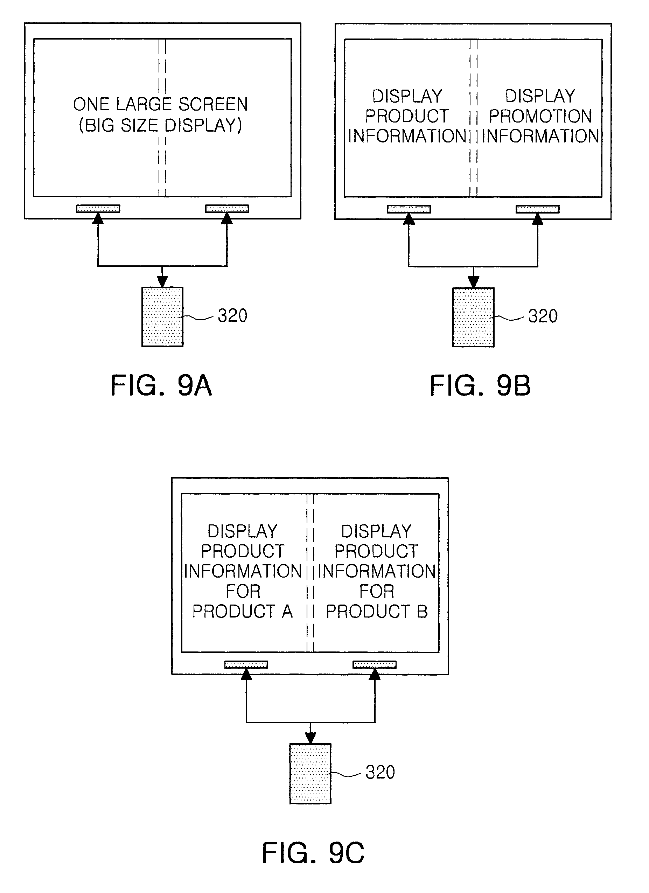

As described above, an example in which the display information is displayed using the first and second display areas DA1 and DA2 will be described with reference to FIGS. 9A through 10B in an example of the case in which the single display panel 340 is divided into the first and second display areas DA1 and DA2. However, the example in which the display information is displayed using the first and second display areas DA1 and DA2 is not limited to a particular example as long as the display information is displayed by individually using the first and second display areas DA1 and DA2.

FIGS. 9A through 9C are views illustrating display examples of a single display panel according to an exemplary embodiment in the present disclosure.

FIG. 9A illustrates an example in which product information for a single product is displayed on one large screen through the first and second display areas DA1 and DA2. For example, the single display panel 340 may display the product information for a single product in a single display mode in the first and second display areas DA1 and DA2 depending on a control of the control unit.

FIG. 9B illustrates an example in which product information and promotion information different from each other are displayed in the first and second display areas DA1 and DA2, respectively. For example, the single display panel 340 may display product information and promotion information for a single product in a divided display mode in each of the first and second display areas DA1 and DA2 depending on a control of the control unit.

FIG. 9C illustrates an example in which product information on product A and product information on product B are displayed in the first and second display areas DA1 and DA2, respectively. For example, the single display panel 340 may display product information for two different products in the divided display mode in each of the first and second display areas DA1 and DA2 depending on a control of the control unit.

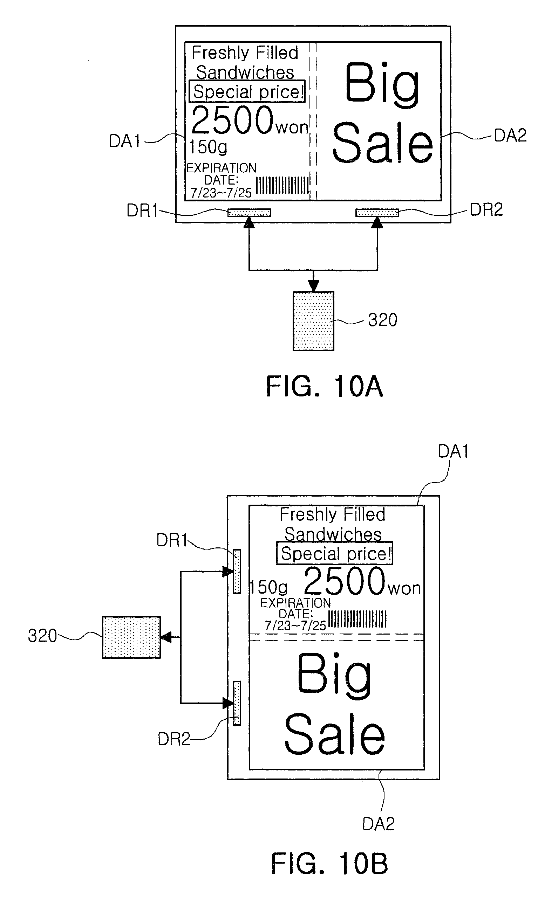

FIGS. 10A and 10B are views illustrating a portrait mode or a landscape mode according to an exemplary embodiment in the present disclosure.

FIG. 10A illustrates an example in which product information and promotion information are displayed in the first and second display areas DA1 and DA2, respectively, in a portrait mode. FIG. 10b illustrates an example in which product information and promotion information are displayed in the first and second display areas DA1 and DA2, respectively, in a landscape mode.

As described above, different modes may allow the display information to be created and formed so as to be appropriate for corresponding modes or allow two display areas of the single display panel to be disposed so as to correspond to corresponding modes. However, the present disclosure is not particularly limited to a specific implementing scheme.

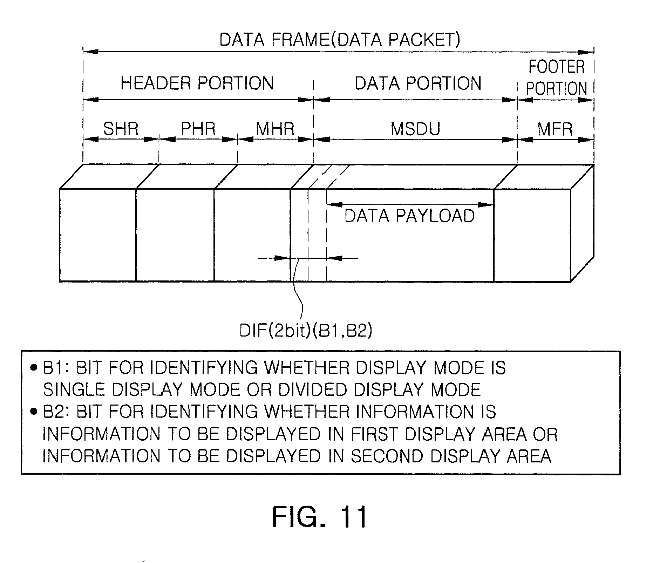

FIG. 11 is a view illustrating a second example of a display identification flag of a data packet according to an exemplary embodiment in the present disclosure.

Referring to FIG. 11, the display identification flag (DIF) may include two bits, that is, a first bit B1 and a second bit B2, so as to identify the display area of the display information.

Here, the first bit B1 may be a bit for identifying whether a display mode is the single display mode or the divided display mode, and the second bit B2 may be a bit for identifying whether information is information to be displayed in the first display area or information to be displayed in the second display area.

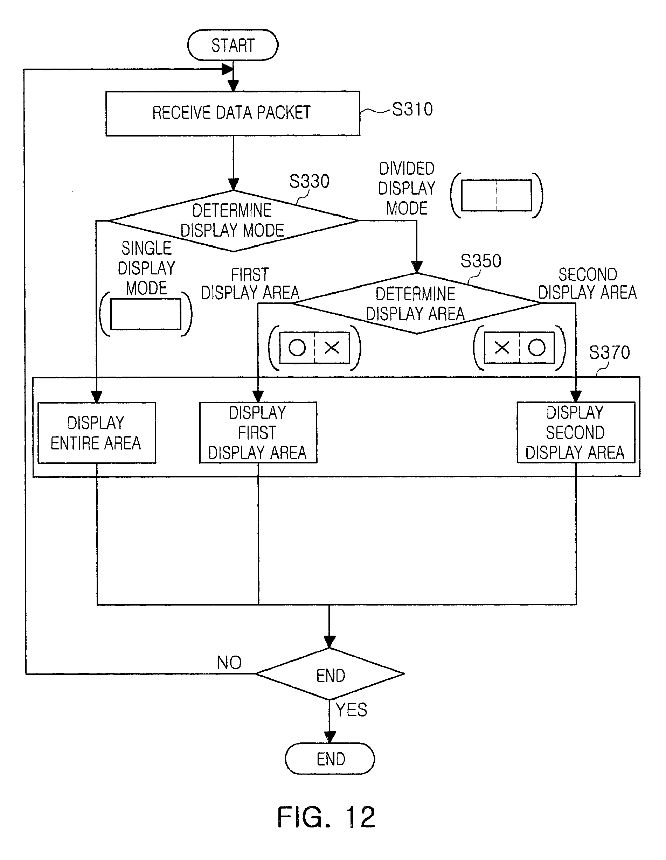

FIG. 12 is a flow chart illustrating an operating method of an electronic shelf label according to an exemplary embodiment in the present disclosure.

Hereinafter, a description provided with reference to FIGS. 1 through 11 may be applied in describing an operating method of an electronic shelf label according to an exemplary embodiment in the present disclosure. Therefore, in describing the operating method of an electronic shelf label according to an exemplary embodiment in the present disclosure, an overlapped detailed description will be omitted, if possible.

Referring to FIG. 12, the wireless communications unit 310 of the electronic shelf label 300 may receive the data packet (DATA-PKT) (S310). The data packet (DATA-PKT) may include at least one of the identification ID, the display identification flag (DIF), and the display information.

The control unit 320 of the electronic shelf label 300 may determine one of the divided display mode and the single display mode with respect to the single display panel 340 depending on the first bit of the display identification flag (DIF) (S330), when the identification included in the data packet coincides with the identification of the electronic shelf label.

Next, the control unit 320 may determine one of the first and second display areas DA1 and DA2 of the single display panel 340 depending on the second bit of the display identification flag (DIF) (S350).

Then, the control unit 320 may display the display information in at least the first and second display areas DA1 and DA2 of the single display panel 340 depending on determination results of the display mode and the display area (S370).

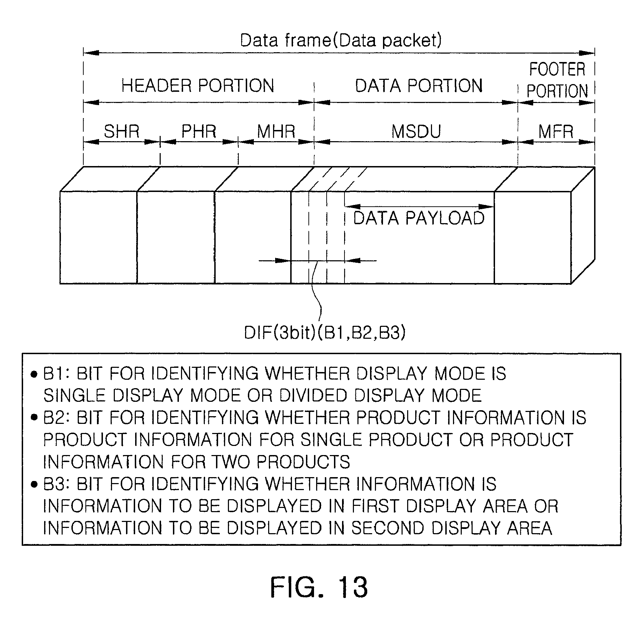

FIG. 13 is a view illustrating a third example of a display identification flag of a data packet according to an exemplary embodiment in the present disclosure.

Referring to FIG. 13, the display identification flag (DIF) may include a first bit, a second bit, and a third bit, so as to identify the display area of the display information.

Here, the first bit B1 may be a bit for identifying whether a display mode is the single display mode or the divided display mode, and the second bit B2 may be a bit for identifying whether product information is product information for a single product or product information for two products. In addition, the third bit B3 may be a bit for identifying whether information is information to be displayed in the first display area or information to be displayed in the second display area.

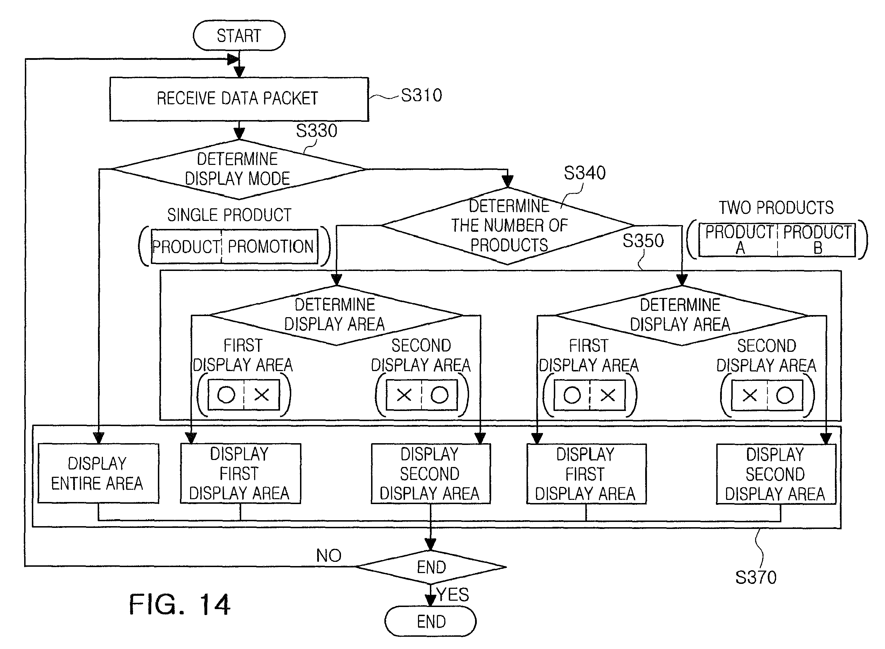

FIG. 14 is a flow chart illustrating an operating method of an electronic shelf label according to an exemplary embodiment in the present disclosure.

Hereinafter, a description provided with reference to FIGS. 1 through 13 may be applied in describing an operating method of an electronic shelf label according to an exemplary embodiment in the present disclosure. Therefore, in describing the operating method of an electronic shelf label according to an exemplary embodiment in the present disclosure, an overlapped detailed description will be omitted, if possible.

Referring to FIG. 14, the wireless communications unit 310 of the electronic shelf label 300 may receive the data packet (S310).

The control unit 320 may determine one of the divided display mode and the single display mode with respect to the single display panel 340 depending on the first bit of the display identification flag (DIF) (S330), when the identification included in the data packet coincides with the identification of the electronic shelf label.

Next, the control unit 320 may determine whether each of the first and second display areas DA1 and DA2 of the single display panel 340 displays the product information for a single product or displays the product information for two different products depending on the second bit of the display identification flag (DIF) (S340).

Next, the control unit 320 may determine one of the first and second display areas DA1 and DA2 depending on the third bit of the display identification flag (DIF) (S350).

Then, the control unit 320 may display the display information in at least the first and second display areas DA1 and DA2 of the single display panel 340 depending on determination results of the display mode, the number of products, and the display area (S370).

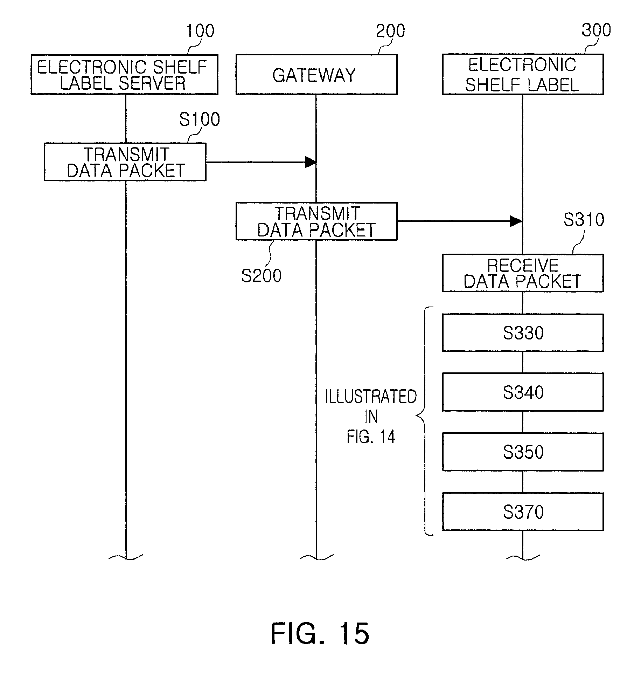

FIG. 15 is view illustrating an operating sequence of an electronic shelf label system according to an exemplary embodiment in the present disclosure. Referring to FIG. 15, first, in S100, the electronic shelf label server 100 may transmit the data packet (DATA-PKT) including at least one of the identification ID, the display identification flag (DIF), and the display information to the gateway 200.

Next, in S200, the gateway 200 may wirelessly transmit the data packet (DATA-PKT).

Then, in S300, each of the plurality of electronic shelf labels 300 may receive the data packet (DATA-PKT) from the gateway 200, and may display the display information on the single display panel 340 including the display unit 342 having at least the first and second display areas DA1 and DA1 based on the display identification flag (DIF) when the identification included in the data packet coincides with the identification of the electronic shelf label.

As described above, exemplary embodiments in the present disclosure may be combined with each other, such that several new exemplary embodiments may be implemented. Particularly, in the case in which the operating method of an electronic shelf label shown in FIGS. 12 and 14 is applied to an operating method of an electronic shelf label system, a new operating method of an electronic shelf label system may be implemented.

As set forth above, according to exemplary embodiments in the present disclosure, the plurality of display areas of the single display panel may be driven in the single display mode or the divided display mode. Therefore, in the case in which the display information is displayed in the single display mode, a large screen of the electronic shelf label may be provided, such that visibility may be secured, and in the case in which the display information is displayed in the divided display mode, the product information and the promotion information may be separately displayed in the independent display areas, such that effects such as a decrease in a system load, a decrease in signal processing power, battery saving, a decrease in a data traffic, and the like, may be expended. In addition, the plurality of display areas (or multiple display areas) of the single display panel may be independently driven, such that a cost required for manufacturing the display panel may be decreased as compared with the case of manufacturing a plurality of display panels.

While exemplary embodiments have been shown and described above, it will be apparent to those skilled in the art that modifications and variations could be made without departing from the scope of the present invention as defined by the appended claims.

## Claims

1. An electronic shelf label wirelessly receiving a data packet including an identification through a gateway connected to an electronic shelf label server and requesting that the gateway transmit display information when the identification included in the data packet coincides with an identification of the electronic shelf label, comprising:
a wireless communications unit receiving the data packet including at least one of the identification ID, display information, and a display identification flag;
a control unit controlling a screen display of the display information based on the display identification flag; and
a single display panel including a driving unit having at least first and second drivers individually controlled by the control unit and a display unit having at least first and second display areas independently driven by each of the at least first and second drivers to display the display information.

2. The electronic shelf label of claim 1, wherein the control unit selects a driver to display corresponding display information, from the at least first and second drivers, based on the display identification flag.

3. The electronic shelf label of claim 1, wherein the display identification flag includes a first bit and a second bit so as to identify a display area of the display information.

4. The electronic shelf label of claim 3, wherein the control unit determines one of a divided display mode and a single display mode with respect to the single display panel depending on the first bit of the display identification flag, and determines one of the first and second display areas of the single display panel depending on the second bit of the display identification flag.

5. The electronic shelf label of claim 1, wherein the display identification flag includes a first bit, a second bit, and a third bit so as to identify a display area of the display information.

6. The electronic shelf label of claim 5, wherein the control unit determines one of a divided display mode and a single display mode with respect to the single display panel depending on the first bit of the display identification flag, determines whether each of the first and second display areas of the single display panel displays product information for a single product or displays product information for two different products depending on the second bit of the display identification flag, and determines one of the first and second display areas depending on the third bit of the display identification flag.

7. The electronic shelf label of claim 6, wherein the single display panel displays the display information for a single product in the single display mode in the first and second display areas depending on a control of the control unit.

8. The electronic shelf label of claim 6, wherein the single display panel displays the product information on the two different products in the divided display mode in each of the first and second display areas depending on a control of the control unit.

9. The electronic shelf label of claim 5, wherein the single display panel displays the product information for a single product in a divided display mode in each of the first and second display areas depending on a control of the control unit.

10. An electronic shelf label system comprising:
an electronic shelf label server creating a data packet including at least one of an identification ID, a display identification flag, and display information;
gateways wirelessly transmitting the data packet; and a plurality of electronic shelf labels receiving the data packet,
wherein each of the electronic shelf labels includes:
a wireless communications unit wirelessly receiving the data packet;
a control unit controlling a screen display of the display information included in the data packet based on the display identification flag when the identification included in the data packet coincides with an identification of the electronic shelf label; and
a single display panel including a driving unit having at least first and second drivers individually controlled by the control unit and a display unit having at least first and second display areas independently driven by each of the at least first and second drivers to display the display information.

11. The electronic shelf label system of claim 10, wherein the control unit selects a driver to display corresponding display information, of the at least first and second drivers, based on the display identification flag.

12. An operating method of an electronic shelf label wirelessly receiving a data packet including an identification through a gateway connected to an electronic shelf label server, displaying display information included in the data packet that is requested of and received from the gateway on a screen when the identification included in the data packet coincides with an identification of the electronic shelf label, and including a single display panel including a driving unit having at least first and second drivers that are individually driven and a display unit having at least first and second display areas, comprising:
wirelessly receiving the data packet including at least one of the identification ID, the display information, and a display identification flag;
determining whether a display mode is a single display mode or a divided display mode based on the display identification flag;
determining whether a display area is the first display area or the second display area based on the display identification flag in the case in which it is determined that the display mode is the divided display mode; and
displaying the display information in the at least first and second display areas of the single display panel depending on determination results of the display mode and the display area.

13. The operating method of an electronic shelf label of claim 12, wherein in the determining of whether or not the display area is the first display area or the second display area, a driver to display corresponding display information, of the at least first and second drivers is selected based on the display identification flag.

14. The operating method of an electronic shelf label of claim 12, wherein the display identification flag includes a first bit and a second bit for determining the display mode and the display area for the first and second display areas.
